# EUROPÄISCHE PATENTSCHRIFT

(11) **EP 3 209 452 B1**
(45) Veröffentlichungstag und Bekanntmachung des Hinweises auf die Patenterteilung: **04.09.2019**
(21) Anmeldenummer: 15783962.2
(22) Anmeldetag: 20.10.2015
(51) Int. Cl.: B23K 9/167, B23K 9/23, B23K 9/235, B23K 9/16, B23K 20/12, B23K 101/14, B23K 103/10

(54) **VERFAHREN ZUR HERSTELLUNG EINES PLATTENWÄRMETAUSCHERS DURCH ZWEI SCHWEISSUNGEN**
METHOD OF PRODUCING A PLATE HEAT EXCHANGER THROUGH TWO WELDMENTS
PROCÉDÉ DE FABRICATION D'UN ÉCHANGEUR THERMIQUE À PLAQUES EN EMPLOYANT DEUX SOUDURES

(30) Priorität: 23.10.2014 EP 14003612
(43) Veröffentlichungstag der Anmeldung: 30.08.2017
(73) Patentinhaber: Linde Aktiengesellschaft, 80331 München (DE)
(72) Erfinder: AIGNER, Herbert, 84549 Engelsberg (DE); WIMMER, Georg, 84577 Tüssling (DE); WIMMER, Richard, 84559 Kraiburg am Inn (DE)
(74) Vertreter: Meilinger, Claudia Sabine
(86) Internationale Anmeldenummer: PCT/EP2015/002073
(87) Internationale Veröffentlichungsnummer: WO 2016/062396

(56) Entgegenhaltungen:
- EP-A2- 1 793 193
- DE-A1- 10 022 595
- US-A1- 2006 013 645
- "The standards of the brazed aluminium plate-fin heat exchanger manufacturer's association ALPEMA STANDARDS- Complete Document; Revision / Edition: 3", ALPEMA STAND, ALUMINIUM PLATE-FIN HEAT EXCHANGER MANUFACTURER'S ASSOCIATION (ALPEMA), US, vol. Third Edition 2010 With Amendments May 2012, 1 January 2010 (2010-01-01), pages 1-84, XP008169329,

## Beschreibung

Die Erfindung betrifft ein Verfahren zur Herstellung eines Plattenwärmetauschers, insbesondere eines gelöteten Aluminium-Plattenwärmetauschers.

Hartgelötete Plattenwärmetauscher aus Aluminium haben sich in zahlreichen Anlagen zur Wärmeübertragung bei verschiedensten Drücken und Temperaturen etabliert. So finden Sie beispielsweise Anwendung bei der Zerlegung von Luft, der Verflüssigung von Erdgas oder in Anlagen zur Herstellung von Ethylen.

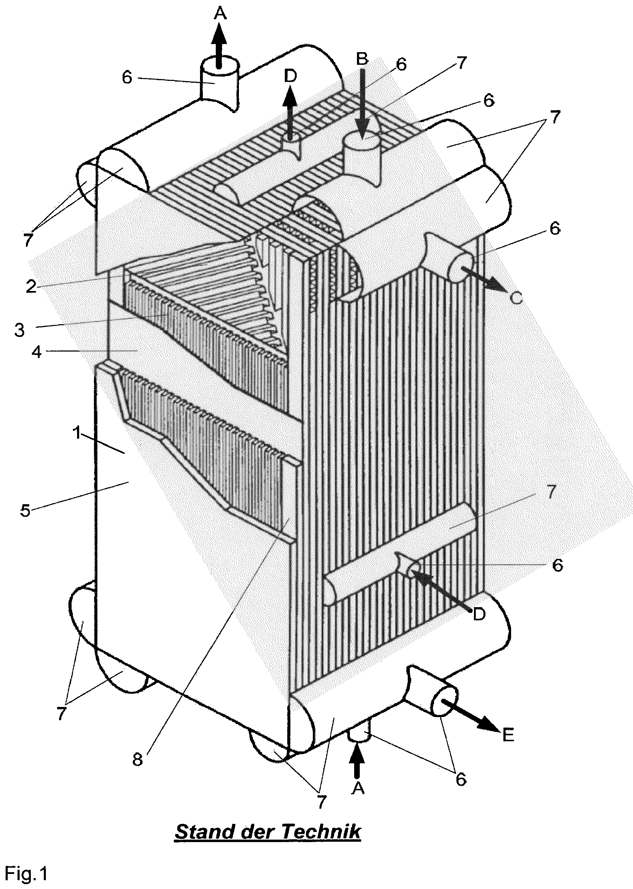

Ein derartiger Plattenwärmetauscher wird z.B. in "The standards of the brazed aluminium plate-fin heat exchanger manufactures association" ALPEMA report (2000), darstellend den Stand der Technik, beschrieben. Eine daraus entnommene Abbildung wird in der Figur 1 als Stand der Technik dargestellt und im Folgenden beschrieben.

Mit dem in Figur 1 dargestellten Plattenwärmetauscher 1 lässt sich ein Wärmeaustausch zwischen mehreren, verschiedenen Prozessströmen, wie z.B. den dargestellten Prozessströmen A, B, C, D und E realisieren. Er ist quaderförmig gestaltet und mit mehreren Mitteln 6 zur Zu- und Abführung der einzelnen Prozessmedien versehen. Diese Mittel 6 werden auch als Stutzen bezeichnet. Der Wärmetauscher weist ebenfalls mehrere Anschlusseinrichtungen 7 zum Verteilen und Sammeln der einzelnen Prozessströme A, B, C, D und E auf, welche auch als Header bezeichnet werden.

Im Wesentlichen umfasst der Plattenwärmetauscher 1 eine Vielzahl stapelförmig angeordneter Passagen 3, die durch Trennbleche 4 voneinander getrennt sind. In den einzelnen Passagen 3 können die verschiedenen Medien strömen. Der Wärmeaustausch erfolgt indirekt über den Wärmekontakt, der durch die Deckbleche 5 und durch die in den Passagen angeordnete wellenförmige Struktur 2 (auch als Fins 2 bezeichnet) realisiert wird. Über die Stutzen 6 werden die einzelnen Medien A, B, C, D und E in die Anschlusseinrichtungen bzw. Header 7 geführt und so auf die jeweils vorgesehenen, stapelförmig angeordneten Passagen 3 verteilt. Im Eingangsbereich der Passagen sind sogenannte Verteilerfins 2 angeordnet, die für eine gleichmäßige Verteilung des Mediums innerhalb der einzelnen Passagen 3 sorgen. Die Medien strömen somit quer zur Wellenrichtung der Fins 2 durch die Passagen 3. Die Fins 2 sind mit den Trennblechen 4 verbunden, wodurch ein intensiver Wärmeleitkontakt hergestellt wird. Dies ermöglicht einen Wärmeaustausch zwischen zwei verschiedenen Medien, die in benachbarten Passagen 3 strömen. In Strömungsrichtung gesehen am Ende der Passage befinden sich ähnliche Verteilerfins 2, die die Medien aus den Passagen in die Header 7 führen, wo sie gesammelt und über den Stutzen 6 abgezogen werden. Die einzelnen Passagen 3 sind durch Randleisten 8, sogenannte Sidebars, nach außen abgeschlossen. Die äußere Begrenzung des gesamten Wärmetauscherblockes ist durch Deckbleche 5 realisiert.

Derartige Plattenwärmetauscher sind hervorragend zum Wärmeaustausch zwischen mindestens zwei Medien geeignet. Durch geeignete Konstruktionen können jedoch, wie in Figur 1 dargestellt, auch mehr als zwei Medien am Wärmeaustausch teilnehmen. Dies erlaubt eine sehr effiziente Prozessführung und eine effektive Nutzung der Temperaturdifferenzen.

Plattenwärmetauscher werden beispielsweise aus Aluminium hartgelötet. Die einzelnen Passagen mit den Fins, Verteilerfins, Deckblechen und Randleisten werden aufeinander gestapelt, mit Lot versehen und in einem Ofen hartgelötet. Dabei werden auch die gewellten Fins mit den angrenzenden Trennblechen 4 verlötet. Die gewellten und verlöteten Fins übertragen die durch den Innendruck erzeugten Kräfte und sind dadurch maßgeblich für die Festigkeit des Wärmetauscherblockes verantwortlich. Auf den entstandenen Block werden dann Anschlusseinrichtungen 7 und Stutzen 6 aufgeschweißt.

Die Anschlusseinrichtungen 7 bzw. Header werden mit dem Wärmetauscherblock 1 üblicherweise durch Schweißen verbunden. Das Aufschweißen der sogenannten Header erfolgt dabei in herkömmlicher Weise auf die nach dem Lötvorgang entstandene Oberfläche des Wärmetauscherblocks 1, die durch die Außenseiten der Trennbleche 4 sowie der dazwischen angeordneten Randleisten 8 ausgebildet ist. Bei diesem Aufschweißen der Anschlusseinrichtungen 7 auf den Wärmetauscherblock 1 besteht jedoch die Gefahr von Undichtigkeiten des von der jeweiligen Anschlusseinrichtung 7 umschlossenen Raums. Dies resultiert zum einen daraus, dass ggf. Vertiefungen auf der Oberfläche des Wärmetauscherblocks 1 beim Aufschweißvorgang nicht erfasst werden, oder dass auf der Oberfläche des Wärmetauscherblocks 1 Löt-Inhomogenitäten verbleiben.

Zudem besteht insbesondere bei gelöteten Wärmetauscherblöcken 1 das Lot oftmals aus einer siliziumhaltigen und/ oder magnesiumhaltigen Aluminiumlegierung. Im Bereich einer kritischen Silizium- bzw. Magnesium-Konzentration im Lot, welches die Trennbleche 4 sowie die Verteilerfins 2 verbindet, besteht bei einer Überschweißung die Gefahr, dass im Gebiet der Schweißung Bereiche entstehen, in denen das Schweißgut einen Silizium- bzw. Magnesium-Gehalt von ca. 1 % aufweist. Eine solche bereichsweise vorhandene Legierung führt zu einer starken Rissanfälligkeit des Materials und somit ggf. zur Undichtigkeit der Anschlusseinrichtung 7 und/oder des Wärmetauscherblocks 1.

Der Erfindung liegt die Aufgabe zu Grunde, ein Verfahren zur Herstellung eines Plattenwärmetauschers zur Verfügung zu stellen, wobei mit dem Verfahren der Plattenwärmetauscher in einfacher, kostengünstiger sowie zeitsparender Art und Weise produziert werden kann, und der Plattenwärmetauscher eine hohe Lebensdauer aufweist.

Diese Aufgabe wird durch das erfindungsgemäße Verfahren zur Herstellung eines Plattenwärmetauschers nach Anspruch 1 gelöst.
Vorteilhafte Ausgestaltungen des erfindungsgemäßen Verfahrens zur Herstellung eines Plattenwärmetauschers sind in den Unteransprüchen angegeben.

Beim erfindungsgemäßen Verfahren zur Herstellung eines Plattenwärmetauschers wird ein Wärmetauscherblock bereitgestellt, der mehrere Trennbleche und dazwischen angeordnete Randleisten, sogenannte Sidebars, umfasst. Des Weiteren wird eine an den Wärmetauscherblock anzubringende Anschlusseinrichtung, ein sogenannter Header, bereitgestellt. Die Anschlusseinrichtung wird auf den Wärmetauscherblock aufgeschweißt. Erfindungsgemäß wird ein zur Fixierung der Anschlusseinrichtung am Wärmetauscherblock vorgesehener Flächenbereich mittels einer ersten Schweißung mit mindestens einer Schweißraupe, auch als Pufferraupe bezeichnet, versehen. Dabei ist das Schweißverfahren, mit dem die erste Schweißung ausgeführt wird, ein Rührreibschweißen. Die Anschlusseinrichtung wird dann mittels einer zweiten Schweißung auf die mittels der ersten Schweißung hergestellten Schweißraupe aufgeschweißt.

Beim Rührreibschweißen wird ein rotierender Stift in Werkstück und somit im Material der Trennbleche sowie der Randleisten entlang einer vorgesehenen Bahn geführt, wobei eine Rührbewegung ausgeführt wird. Im Gegensatz zum herkömmlichen Lichtbogenschweißen wird das rührreibgeschweißte Material dabei nicht schmelzflüssig, sondern teigig. Dies hat den Effekt, dass eine metallurgisch bedingte Rissanfälligkeit verringert wird. Zudem wird erheblich weniger Wärme in das Material eingebracht als bei einer herkömmlichen Lichtbogenschweißung, so dass auch wärmespannungsbedingte Risse verhindert werden.

Dieses Rührreibschweißen kann mit oder ohne die Zugabe eines Zusatz-Schweißwerkstoffes erfolgen. Insofern kein Zusatzwerkstoff verwendet wird, erzeugt die Rührreibschweißung die Schweißraupe lediglich durch Umschmelzung der Oberfläche des Flächenbereiches ohne Vergrößerung des Volumens des geschweißten Bereiches.

Zwecks optimalen Anschlusses der üblicherweise mit einem rechteckigen Querschnitt versehenen Anschlusseinrichtung an die Schweißraupe ist diese entsprechend der Kontur und der Maße der Anschlusseinrichtung in Rahmenform auszuführen.
Die Breite der mittels der ersten Schweißung erzeugten Schweißraupe ist vorzugsweise mindestens derart bemessen, dass auf der Schweißraupe eine Anschlusseinrichtung mittels einer Kehlnaht durch die zweite Schweißung angeschweißt werden kann, wobei mit der Kehlnaht lediglich Bereiche der Oberfläche des Plattenwärmetauschers aufgeschmolzen werden, die mit der Schweißraupe versehen wurden. Die Breite der Schweißraupe kann beispielsweise das 2- bis 3-fache der Dicke der Wandstärke der Anschlusseinrichtung im anzuschweißenden Bereich aufweisen.

Das erfindungsgemäße Verfahren zur Herstellung eines Plattenwärmetauschers ist vorzugsweise zur Produktion von Aluminium-Plattenwärmetauschern anzuwenden. Die auch als Header bezeichnete Anschlusseinrichtung ist im Bereich von Strömungsöffnungen bzw. Passagen des Wärmetauscherblocks an diesen anzubringen und deckt damit Kanten von parallel angeordneten Trennblechen sowie dazwischen angeordneten Randleisten, den sogenannten Sidebars, bzw. dazwischen befindliche Spalte ab. Der zur Fixierung der Anschlusseinrichtung am Wärmetauscherblock vorgesehene Flächenbereich kann dabei etwas größer sein als die tatsächliche Fläche, die von der Anschlusseinrichtung auf dem Wärmetauscherblock im befestigten Zustand abgedeckt wird, bzw. der Rand der Schweißraupe kann einen gewissen Abstand haben zu der betreffenden Kante der Anschlusseinrichtung im angeschweißten Zustand.

Die Schweißraupe bzw. sogenannte Pufferraupe ist dabei eine aufgebrachte oder eingebrachte Schweißnaht zur Vergleichmäßigung und /oder Homogenisierung des Materials bzw. Gefüges der Verbindungen zwischen den Trennblechen und den Randleisten. Diese Vergleichmäßigung wird z.B. durch Umschmelzen von oberflächlichen, bis in eine Tiefe von 5 mm reichenden Löt-inhomogenitäten mit einer damit einhergehenden Beseitigung dieser Löt-Inhomogenitäten erreicht. Die Gefahr des Auftretens von Undichtigkeiten im Betrieb des Wärmetauschers wird dadurch erheblich verringert.

Die erfindungsgemäß zu erzeugende Schweißraupe kann dabei mit oder ohne Einbringung von Schweißzusatzwerkstoff geschweißt werden.

Insbesondere bei einem kritischen Silizium- bzw. Magnesium-Gehalt des die Trennbleche sowie die Verteilerfins verbindenden Lots lässt sich das erfindungsgemäße Verfahren einsetzen, da mit dem Rührreibschweißen eine Erweichung der zu verschweißenden Werkstoffe nur bis in einen teigigen Zustand realisiert wird und keine Verflüssigung, so dass eine Rissbildungsgefahr deutlich gemindert wird.

Mittels der ersten Schweißung am Wärmetauscherblock werden Unebenheiten des zur Fixierung der Anschlusseinrichtung am Wärmetauscherblock vorgesehenen Flächenbereiches zumindest teilweise ausgeglichen. Dabei ist es möglich, Unebenheiten unter einer Tiefe bzw. Höhe von 5 mm bzw. mit einer Amplitude von bis zu 2 mm auszugleichen. Diese Vergeichmäßigung der Oberfläche bewirkt eine Aufwandsverringerung bei der anschließenden Schweißnahtvorbereitung zur Anschweißung der Anschlusseinrichtung sowie eine geringere Gefahr von schweißbedingten Undichtigkeiten zwischen dem Wärmetauscherblock und der Anschlusseinrichtung.

Zudem werden bei gelöteten Plattenwärmetauschern Löt-Inhomogenitäten zwischen Trennblechen und Randleisten zumindest teilweise beseitigt. Vorzugsweise werden derartige Löt-Inhomogenitäten vollständig beseitigt. Dadurch lassen sich im Lötprozess aufgetretene Fehler im Nachhinein ausgleichen.

In vorteilhafter Ausgestaltung ist der Plattenwärmetauscher ein gelöteter Plattenwärmetauscher. Das heißt, dass dieser Plattenwärmetauscher z.B. gewellte Lamellen und Fins zwischen den Trennblechen aufweisen kann, die mittels Lötung mit den Trennblechen verbunden sind.

Der Plattenwärmetauscher kann zur Verbindung der einzelnen Passagen mit den Fins, Verteilerfins, Deckblechen und Randleisten flächig ausgeführte oder auch punktweise Lötstellen aufweisen. Das jeweilige zum Einsatz kommende Lot kann eine Silizium-Legierung, eine Magnesium-Legierung oder auch eine Magnesium und Silizium umfassende Legierung sein. Zur Herstellung eines Aluminium-Plattenwärmetauschers können diese Legierungen auch jeweils eine Aluminium-Legierungskomponente aufweisen.

Der Silizium- bzw. Magnesium-Gehalt der mittels der ersten Schweißung hergestellten Schweißraupe ist vorzugsweise größer als 1,5 % oder geringer als 0,5 %. Das heißt, dass ein Silizium- bzw. Magnesium-Gehalt der hergestellten Schweißraupe anzustreben ist, der außerhalb des Bereiches von 0,5 % bis 1,5 % Silizium bzw. Magnesium liegt.

Die erzeugte Schweißraupe auf dem Wärmetauscherblock kann dabei einen Schweißzusatzwerkstoff aufweisen, mit dem ggf. auch eine gewünschte Silizium- bzw. Magnesium-Konzentration in der Schweißraupe eingestellt ist.

Durch die Schweißung der Schweißraupe mittels Rührreibschweißen und dem damit verbundenen geringeren Wärmeeintrag kann verhindert werden, dass eine sich beim Lichtbogenschweißen normalerweise einstellende erhöhte Rissbildungsgefahr besteht. Das heißt, dass herkömmliche Lötverbindungen bzw. Lötmaterialen weiterhin verwendet werden können und die Anschlusseinrichtungen an den Wärmetauscherblock angeschweißt werden können, ohne die Gefahr einer siliziumkonzentrationsbedingten bzw. magnesiumkonzentrationsbedingten Rissbildung hinnehmen zu müssen.

Die Erfindung wird im Folgenden anhand der Ihnen beiliegenden Zeichnungen dargestellten Ausführungsbeispiele erläutert.

Es zeigen
- Figur 1:: einen herkömmlichen Plattenwärmetauscher,
- Figur 2:: eine vergrößerte, perspektivische Ansicht eines oberen Bereichs eines Wärmetauscherblocks.

Auf die konstruktive Ausbildung eines herkömmlichen Plattenwärmetauschers wurde bereits zur Darlegung des Standes der Technik in Bezugnahme auf Figur 1 eingegangen.

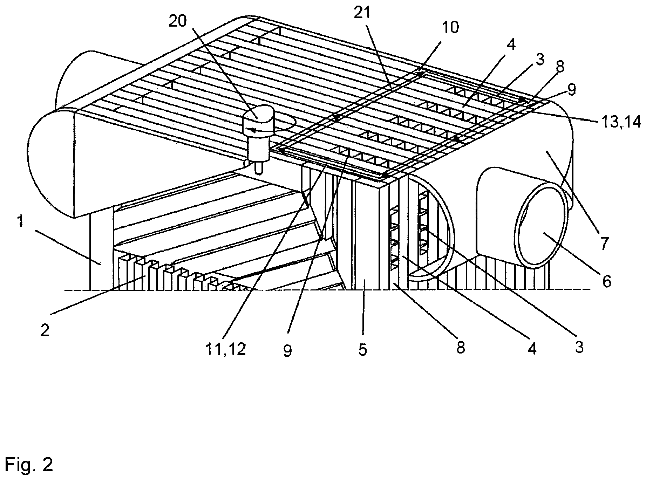

Auch in dem in Figur 2 dargestellten Wärmetauscherblock 1 sind die Verteilerfins 2, die Passagen 3 zur Leitung der Prozessströme A, B, C, D, E, die Trennbleche 4 sowie ein Deckblech 5 ersichtlich. An den auch als Header bezeichneten Anschlusseinrichtungen 7 sind Mittel zur Zu- und Abführung 6 der Prozessströme A, B, C, D, E als Stutzen 6 angeordnet. Weiterhin sind die zwischen einzelnen Trennblechen 4 angeordneten Randleisten 8 ersichtlich, die auch als Sidebars bezeichnet werden.

Insbesondere auf Grund von unvermeidlichen Fertigungstoleranzen und /oder lötungsbedingten Wärmeverzuges können Spalte 9 zwischen Trennblechen 4 und Randleisten 8 auftreten. Zudem kann zwischen den Randleisten 8 sowie den Trennblechen 4 vorhandenes Lot gewisse Inhomogenitäten aufweisen. Weiterhin kann nicht ausgeschlossen werden, dass die äußeren Oberflächen der Trennbleche 4 sowie der Randleisten 8 Unebenheiten aufweisen. Diese Spalte, Inhomogenitäten sowie Unebenheiten können insbesondere bei automatisierter Anschweißung der Anschlusseinrichtungen 7 an den Wärmetauscherblock 1 zu Undichtigkeiten führen.

Es ist daher erfindungsgemäß vorgesehen, dass die Oberfläche des Wärmetauscherblocks 1 in einem Flächenbereich 10, der zur Fixierung der Anschlusseinrichtung 7 am Wärmetauscherblock 1 vorgesehen ist, mittels einer in einer ersten Schweißung 11 erzeugten Schweißraupe 12 versehen wird. Mit dieser Schweißraupe 12 wird der Flächenbereich 10 vergleichmäßigt sowie dort etwaig vorhandene Löt-Inhomogenitäten beseitigt. Diese erste Schweißung 11 wird mittels Rührreibschweißen durchgeführt, wobei das dargestellte, zapfenförmige Schweißwerkzeug 20 unter ständiger Rotation um seine Längsachse auf der mit den Pfeilen angedeuteten translatorischen Bahn 21 durch den Wärmetauscherblock 1 und somit durch die parallel zueinander angeordneten Trennbleche 4 sowie Randleisten 8 bewegt wird. Durch die dabei erzeugte Reibwärme wird das Material der Trennbleche 4 sowie der Randleisten 8 teigig und es wird eine Schweißverbindung zwischen diesen Wärmetauscherelementen erzeugt. Dabei werden die verschweißten Materialen vorzugsweise jedoch nicht derart erhitzt, dass eine gegebenenfalls vorhandene kritische Silizium- bzw. Magnesium-Konzentration von 0,5 % bis 1,5 % im Schweißnahtbereich zur Gefahr einer Rissbildung führen könnte.

Nach erfolgter Aufbringung der Schweißraupe wird mittels einer zweiten Schweißung 13 eine Schweißnaht 14 erzeugt, mit der die Anschlusseinrichtung 7 auf der Schweißraupe 12 und somit am Wärmetauscherblock 1 angeschweißt wird, wie es in Figur 2 an der Kante der bereits am Wärmetauscherblock 1 angeordneten Anschlusseinrichtung 7 angedeutet ist.

**Bezugszeichenliste**

| | |
|---|---|
| 1 | Wärmetauscherblock |
| 2 | Verteilerfin |
| 3 | Passage |
| 4 | Trennblech |
| 5 | Deckblech |
| 6 | Mittel zur Zu- und Abführung |
| 7 | Anschlusseinrichtung |
| 8 | Randleiste |
| A, B, C, D, E | Prozessstrom |
| 9 | Spalt |
| 10 | Flächenbereich |
| 11 | erste Schweißung |
| 12 | Schweißraupe |
| 13 | zweite Schweißung |
| 14 | Schweißnaht |
| 20 | Schweißwerkzeug |
| 21 | Translatorische Bahn |

## Patentansprüche

1. Verfahren zur Herstellung eines Plattenwärmetauschers, bei dem:
- ein mehrere Trennbleche (4) und dazwischen angeordnete Randleisten (8) umfassender Wärmetauscherblock (1) bereitgestellt wird,
- eine an den Wärmetauscherblock (1) anzubringende Anschlusseinrichtung (7) bereitgestellt wird, und
- die Anschlusseinrichtung (7) auf den Wärmetauscherblock (1) aufgeschweißt wird,
**dadurch gekennzeichnet, dass**
- ein zur Fixierung der Anschlusseinrichtung (7) am Wärmetauscherblock (1) vorgesehener Flächenbereich (10) mittels einer ersten Schweißung (11) mit mindestens einer Schweißraupe (12) versehen wird, wobei das Schweißverfahren, mit dem die erste Schweißung (11) ausgeführt wird, ein Rührreibschweißen ist, und
- mittels einer zweiten Schweißung (13) die Anschlusseinrichtung (7) auf die Schweißraupe (12) aufgeschweißt wird.

2. Verfahren zur Herstellung eines Plattenwärmetauschers nach Anspruch 1, **dadurch gekennzeichnet, dass** der Silizium-Gehalt und/ oder der Magnesium-Gehalt der mittels der ersten Schweißung (11) hergestellten Schweißraupe (12) größer oder kleiner als 0,5% bis 1,5% ist.

3. Verfahren zur Herstellung eines Plattenwärmetauschers nach einem der Ansprüche 1 oder 2, **dadurch gekennzeichnet, dass** die Schweißraupe (12) einen Schweißzusatzwerkstoff aufweist.

4. Verfahren zur Herstellung eines Plattenwärmetauschers nach einem der Ansprüche 1 bis 3, **dadurch gekennzeichnet, dass** der Plattenwärmetauscher ein gelöteter Plattenwärmetauscher ist.

## Claims

1. Method for producing a plate heat exchanger, in which:
- a heat-exchanger block (1) comprising a plurality of partition sheets (4), and peripheral strips (8) arranged therebetween, is supplied,
- a connection device (7), which is to be fitted on the heat-exchanger block (1), is supplied, and
- the connection device (7) is welded onto the heat-exchanger block (1),
**characterized in that**
- a surface-area region (10) provided for fixing the connection device (7) on the heat-exchanger block (1) is provided, by means of a first weld (11), with at least one weld bead (12), wherein the welding method which performs the first weld (11) is friction stir welding, and
- the connection device (7) is welded onto the weld bead (12) by means of a second weld (13).

2. Method for producing a plate heat exchanger according to Claim 1, **characterized in that** the silicon content and/or the magnesium content of the weld bead (12) produced by means of the first weld (11) is greater than or less than 0.5% to 1.5%.

3. Method for producing a plate heat exchanger according to either of Claims 1 and 2, **characterized in that** the weld bead (12) has a filler material.

4. Method for producing a plate heat exchanger according to one of Claims 1 to 3, **characterized in that** the plate heat exchanger is a soldered plate heat exchanger.

## Revendications

1. Procédé de fabrication d'un échangeur de chaleur à plaques, selon lequel :
- un bloc échangeur de chaleur (1) comprenant plusieurs tôles de séparation (4) et des baguettes de lisière (8) disposées entre celles-ci est fourni,
- un dispositif de raccordement (7) à monter sur le bloc échangeur de chaleur (1) est fourni et
- le dispositif de raccordement (7) est soudé sur le bloc échangeur de chaleur (1),
**caractérisé en ce que**
- une zone de surface (10), destinée à la fixation du dispositif de raccordement (7) au bloc échangeur de chaleur (1), est pourvue d'au moins un cordon de soudure (12) au moyen d'un premier soudage (11), le procédé de soudage avec lequel est réalisé le premier soudage (11) étant un soudage par friction-malaxage et
- le dispositif de raccordement (7) est soudé sur le cordon de soudure (12) au moyen d'un deuxième soudage (13) .

2. Procédé de fabrication d'un échangeur de chaleur à plaques selon la revendication 1, **caractérisé en ce que** la teneur en silicium et/ou la teneur en magnésium du cordon de soudure (12) produit au moyen du premier soudage (11) est supérieure ou inférieure à 0,5 % à 1,5 %.

3. Procédé de fabrication d'un échangeur de chaleur à plaques selon l'une des revendications 1 ou 2, **caractérisé en ce que** le cordon de soudure (12) possède un métal d'apport pour soudure.

4. Procédé de fabrication d'un échangeur de chaleur à plaques selon l'une des revendications 1 à 3, **caractérisé en ce que** l'échangeur de chaleur à plaques est un échangeur de chaleur à plaques brasé.
